# FASCICULE DE BREVET EUROPEEN

(11) **EP 0 865 892 B1**
(45) Date de publication et mention de la délivrance du brevet: **25.06.2003**
(21) Numéro de dépôt: 98400521.5
(22) Date de dépôt: 05.03.1998
(51) Int. Cl.: B29C 43/32, B29C 33/52, B29C 70/44

(54) **Procédé de réalisation de pièces creuses de précision en matériau composite**
Verfahren zur Herstellung von hohlen Präzisionskörpern aus Verbundwerkstoff
Process for manufacturing precision hollow articles made of composite material

(30) Priorité: 06.03.1997 FR 9702663
(43) Date de publication de la demande: 23.09.1998
(73) Titulaire: Snecma Moteurs, 75015 Paris (FR)
(72) Inventeur: Castanie, Jean-Louis Robert Marcel, 76600 Le Havre (FR); Celerier, Eric, 91800 Boussy St Antoine (FR); Goncalves, Alain François, 39370 Les Bouchoux (FR)

(56) Documents cités:
- FR-A- 2 562 834
- GB-A- 2 070 502
- GB-A- 2 154 286
- GB-A- 2 173 144
- US-A- 3 495 494
- US-A- 3 795 559
- US-A- 4 167 430
- US-A- 4 271 116
- US-A- 4 388 263
- US-A- 4 681 724

## Description

L'invention se rapporte aux procédés de réalisation de pièces creuses en matériau composite stratifié comportant des fibres de renfort noyées dans une matrice de résine organique polymérisée, et plus particulièrement aux procédés adaptés à la réalisation de pièces aux caractéristiques élevées en résistance, précision et tenue en température.

Les matériaux composites stratifiés comportant des fibres de renfort noyées dans une matrice de résine polymérisée sont appréciés notamment dans l'aéronautique pour leur excellent rapport résistance/masse et tendent lorsque cela est possible à remplacer les alliages métalliques, notamment dans le cas de pièces composées de parois minces obtenues traditionnellement par fonderie ou chaudronnerie.

On cherche à réaliser ainsi des pièces de turbomachine et notamment de turbomoteur pour aéronef, par exemple des bras de carter de compresseur basse pression ou des aubes creuses de compresseur basse pression qui sont composées de parois minces formant et entourant des cavités débouchantes, c'est à dire non complètement fermées. Ces pièces doivent être monobloc, afin d'éviter les zones d'assemblage génératrices de faiblesses. Ces pièces doivent aussi être précises avec un bon état de surface pour éviter les reprises d'usinage. Ces pièces doivent résister aux températures élevées et doivent avoir un prix de revient comparable ou inférieur aux pièces métalliques équivalentes.

On connaît le procédé "resin transfert molding" ou RTM consistant à disposer des fibres de renfort dans un moule à la forme de la pièce finie, à injecter de la résine très liquide sous pression dans le moule et à polymériser la résine maintenue sous pression. Ce procédé permet d'obtenir des pièces précises et résistantes avec des formes très variées. Cependant, les résines employées n'ont pas une bonne résistance en température, ce qui limite l'utilisation du procédé aux pièces devant rester froides.

Les résines résistants aux températures plus élevées ne présentent pas une fluidité suffisante avant polymérisation. De ce fait, il faut pour réaliser des pièces creuses stratifiées avec ces résines :
- préimprégner des nappes de tissus ou de fibres avec la résine,
- constituer un noyau éventuellement susceptible d'être détruit,
- entourer le noyau par une vessie gonflable en élastomère,
- draper, c'est à dire disposer autour de l'ensemble noyau + vessie les nappes de tissus ou de fibres préimprégnées, constituant ainsi la matière composite,
- mettre l'ensemble noyau + vessie + matière composite dans un moule à la forme extérieure de la pièce finie,
- gonfler la vessie,
- polymériser la résine,
- dégonfler la vessie et démouler,
- retirer ou détruire le noyau,
- retirer la vessie.

Dans ce procédé, le gonflage de la vessie permet simultanément de :
- plaquer la matière composite contre la paroi du moule,
- comprimer et faire fluer la matière composite pour réduire les porosités provenant des bulles d'air emprisonnées entre les nappes de fibres ainsi que des émissions gazeuses de la résine pendant la polymérisation, chasser la résine en excès et augmenter ainsi la densité de fibre. Une compression de 20% de l'épaisseur de la paroi est habituellement effectuée.

On comprend qu'avec un tel procédé, seule la surface de la pièce au contact de la paroi du moule est précise. La surface au contact de la vessie est au contraire irrégulière et rugueuse et suit les hétérogénéité inévitables du drapage des fibres de renfort. Réciproquement, on pourrait imaginer de comprimer la matière composite sur le noyau, mais cette solution provoquerait un plissement inacceptable des fibres de renfort, ce plissement réduisant la résistance de la pièce.

Un premier problème est en conséquence d'obtenir, à partir de fibres ou de tissus préimprégnés, des pièces creuses de forme variables dont les surfaces intérieures et extérieures sont précises et lisses, sans plissement des fibres de renfort.

La polymérisation de la résine s'accompagne d'une émission de composants gazeux ainsi que d'une réduction du volume de la résine qui tendent toutes deux à rendre poreuse la matière composite obtenue. Cette porosité peut être réduite mais non supprimée en aménageant des moyens d'évacuation des gaz et en comprimant la matière composite pendant la polymérisation, alors que la résine n'a pas encore durci, cette compression devant de préférence provoquer une déformation ou fluage important de la matière composite. La porosité résiduelle réduisant la résistance de la pièce finale, un second problème est de réduire en général la porosité de la matière composite, et en particulier d'augmenter à cette fin le fluage de ladite matière composite pendant la polymérisation.

Lorsque les cavités débouchent sur l'extérieur par des ouvertures trop petites, ce qui est souvent le cas, les noyaux ne peuvent être éliminés que par la destruction de la matière qui les compose. On commercialise pour se faire des matériaux moulables à la forme désirée qui peuvent ensuite être dissous à l'eau ou avec un solvant après que la pièce ait été moulée. De tels noyaux ne conviennent cependant pas dans le cas présent, car l'obtention de surfaces intérieures précises exigerait la compression centripète de la matière composite sur le noyau avec les inconvénients précédemment décrits. Un troisième problème est en conséquence d'éliminer les noyaux après le moulage de la pièce.

Un frein à l'utilisation de tels matériaux composites est le coût de production élevé des pièces par rapport à des pièces équivalentes en alliages métalliques. Ce coût élevé provient notamment des nombreuses manipulations requises pour la fabrication. Il convient en conséquence de ne pas augmenter la complexité du procédé de fabrication.

On connaît par le brevet FR.2.562.834 un procédé de moulage de pièces creuses en matériau composite fibre-résine polymérisée utilisant un moule extérieur et un noyaux en élastomère silicone, ce matériau ayant un très fort coefficient de dilatation thermique. Dans un tel procédé, le noyau comprime la matière composite contre les parois du moule sous l'effet de la dilatation thermique de l'élastomère silicone pendant le cycle de polymérisation à chaud. Un tel procédé permet d'obtenir des surfaces intérieures et extérieures précises, mais la porosité de la matière composite obtenue n'est pas négligeable. De ce fait, et afin d'obtenir des surfaces homogènes et lisses, le brevet propose aussi en page 8 lignes 1 à 5 d'utiliser une peinture ou un gelcoat.

On connaît également par le brevet GB 2 154 286 un procédé selon le préambule de la revendication 1 de fabrication de pales creuses en matériau composite constitué de fibres de renfort noyées dans une matrice de résine polymérisable, ce procédé utilisant notamment des noyaux en caoutchouc silicone et un moule en deux parties dont les parois intérieures sont susceptibles d'être rapprochées pendant la polymérisation afin de comprimer la résine. L'élimination des noyaux se fait simplement en les poussant vers une ouverture à une extrémité de la pale, la pièce étant conçue avec une ouverture suffisamment grande pour que les noyaux puissent y passer. Ce brevet ne permet donc pas d'extraire simplement les noyaux lorsque les ouvertures de la pièce sont réduites.

On connaît également par le brevet US 4,388,263 un procédé de moulage de pièces creuses en matériau composite constitué de fibres noyées dans une matrice de résine polymérisable, ce procédé mettant en oeuvre des blocs de caoutchouc thermiquement expansibles pour provoquer la compression et le dégazage de nervures de renfort à l'intérieur de la piéce.

La présente invention a pour objet un procédé selon la revendication 1.

On comprend que les surfaces de la pièce en contact avec les parois du moule sont précises, le moule étant rigide par définition, puisque les parois du moule sont positionnées avec précision à la fin de leur rapprochement. Typiquement, une précision de 0,05 mm est obtenue avec ce procédé. Ces même surfaces sont très lisses, la porosité de la matière étant elle-même très réduite, puisque les parois du moule reproduisent dans ces conditions sur la pièce leur propre état de surface.

On comprend qu'il en est de même avec les surfaces des pièces au contact des noyaux. Cependant, l'élastomère silicone composant les noyaux étant souple par définition, la précision de ces surfaces est plus réduite. Elle reste cependant bonne puisque la matière composite est appuyée contre les parois du moule.

On comprend aussi qu'une expansion des noyaux par dilatation thermique de l'élastomère silicone qui les compose est nécessaire pour retendre les fibres de renfort qui autrement auraient été plissées sous l'effet de la compression centripète produite par le rapprochement des parois du moule.

On comprend enfin que cette double action, à la fois centripète par le rapprochement des parois du moule et centrifuge par expansion des noyaux provoque un fluage important de la matière composite, ce qui a pour effet de réduire la porosité de ladite matière composite.

Avec le procédé objet de la présente invention, on peut remarquer que la compression n'est plus liée à expansion par dilatation thermique de noyaux en élastomère silicone, comme dans le brevet FR.2.562.834, puisque la dilatation thermique des noyaux n'a pas pour effet de comprimer la matière composite contre les parois du moule, mais seulement de repousser lesdites parois du fait que la partie mâle du moule coulisse dans la partie femelle. Pour obtenir cette compression, il faut appliquer une force extérieure sur ce moule, par exemple à l'aide d'une presse ou en augmentant la pression de l'autoclave.

Avantageusement, la résine comportant pendant sa polymérisation une phase de dégagements gazeux et une phase de durcissement séparées par une phase pendant laquelle la résine est encore liquide, donc susceptible d'être comprimée, la compression sera effectuée entre la phase de dégagement gazeux et la phase de durcissement. Une telle disposition a pour effet de maintenir une quantité plus importante de résine à l'intérieur du moule, et pour résultat de réduire la porosité de la matière composite ainsi obtenue. On comprend en effet que la résine reste dans le moule, car elle n'est plus comprimée au début du cycle de polymérisation, et notamment pendant les dégagements gazeux. De plus, la compression s'effectuant avec une quantité de résine plus importante dans le moule, les gaz stagnants à l'intérieur du moule sont plus facilement expulsés. Ces deux facteurs se cumulent pour réduire la porosité de la matière composite obtenue.

Si on appelle T1 la température de transition de la résine de l'état pâteux à l'état solide, l'homme du métier donnera au noyau à cette température T1, ou à une température un peu inférieure à T1, la forme et les dimensions de la cavité à obtenir, corrigée éventuellement de la dilatation thermique du composite polymérisé qui reste très faible, de l'ordre de 1.10⁻⁶/°C. Ceci a pour effet de donner auxdites cavités les dimensions requises au départ du durcissement de la résine. Les dimensions du noyau à froid seront ensuite calculées en appliquant sur les dimensions à chaud un coefficient correspondant à la dilatation thermique de l'élastomère silicone entre la température T1 et la température ambiante, l'élastomère étant lui-même habituellement obtenu par polymérisation à froid. Typiquement, une précision de 0,1 mm est ainsi obtenue.

La dureté de l'élastomêre n'est pas critique, l'homme du métier se contentant de choisir un élastomère de dureté suffisante, au moins égale à 30 shore A, pour que les déformations éventuelles du noyau restent compatibles avec la précision exigée de la pièce. En cas de besoin, il est possible d'augmenter la dureté d'un élastomère par une charge de microbilles, par exemple en verre.

Le choix d'un élastomère-silicone dont la température d'effritement T2 est inférieure à la température T3 de durcissement par polymérisation complète de la résine a pour effet de désagréger le noyau d'élastomère silicone pendant le moulage sous l'effet de la température à la laquelle est portée la matière composite en cours de polymérisation. La matière composant le noyau peut alors être facilement retirée de la cavité après le moulage par un simple lavage à l'eau, voire un grattage ou un brossage ce qui résout le second problème.

Dans un mode de réalisation préféré, on choisira un élastomère-silicone dont la température d'effritement T2 est comprise entre T1 et T3. Cette disposition a pour effet de maintenir les noyaux à l'état solide tant que les cavités n'ont pas été formées aux dimensions requises, et de désagréger ensuite les noyaux alors que la matière composite est elle-même passée à l'état solide, afin de ne pas risquer de la fissurer.

Avantageusement aussi on renforcera les noyaux par des barreaux en matériaux plus résistants, par exemple en alliage métallique, afin d'empêcher la déformation éventuelle des noyaux pendant le drapage ou le moulage. Avantageusement enfin, les barreaux de renfort déborderont du noyau et prendront appui dans le moule afin d'améliorer la précision du positionnement des noyaux dans le moule et par répercussion la précision du positionnement des cavités de la pièce.

L'invention sera mieux comprise et les avantages qu'elle procure apparaîtront plus clairement au vu d'un exemple détaillé de réalisation et des figures annexées.

La figure 1 illustre suivant une coupe transversale un bras de carter de compresseur basse pression de turbomoteur pour aéronef en cours de moulage. Par mesure de clarté, les épaisseurs du bras et des nappes de fibres ont été augmentées.

La figure 2 illustre suivant une coupe longitudinale partielle selon AA l'extrémité de ce même bras de carter en cours de moulage.

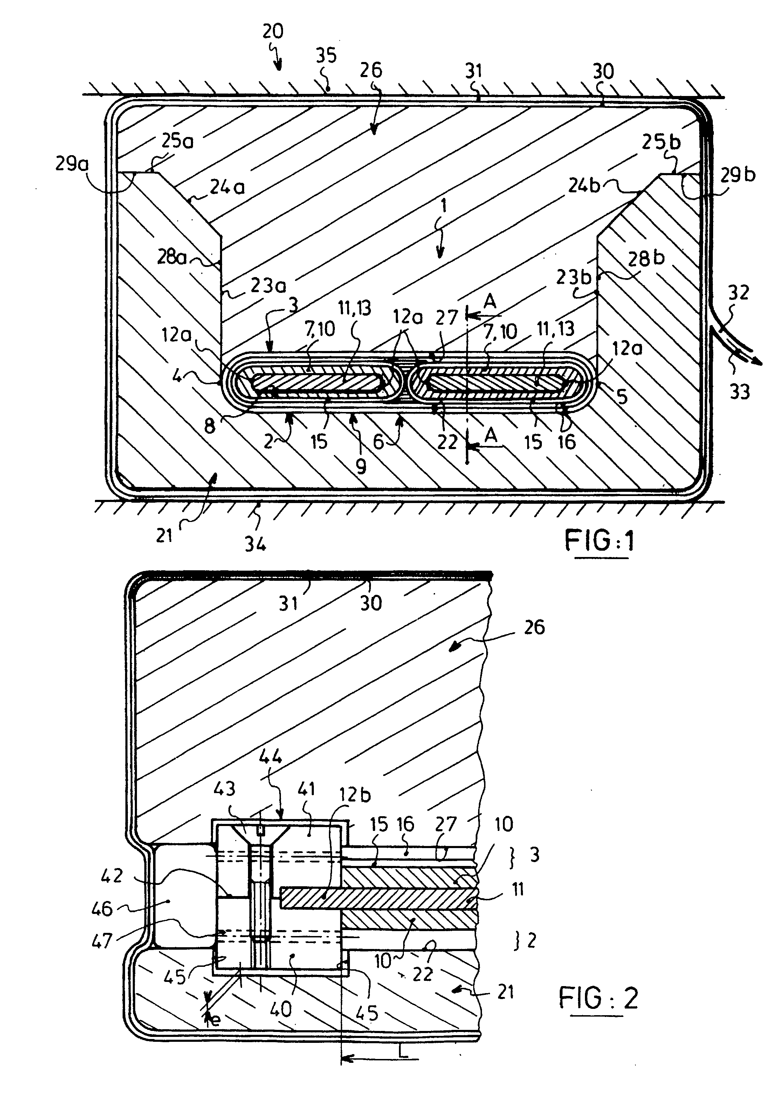

On se reportera en premier lieu à la figure 1. La pièce 1 est mince et allongée et comporte deux parties latérales ou flancs minces 2, 3 qui se rejoignent à l'extrémité arrière 4 ainsi qu'à l'extrémité avant 5. Au milieu de la pièce 1, une nervure 6 relie aussi les flancs 2 et 3 entre eux afin d'en augmenter la rigidité et d'augmenter aussi la rigidité de la pièce 1. Les flancs 2, 3 associés à la nervure 6 définissent deux cavités allongées 7. On référencera 8 les surfaces intérieures de la pièce 1 formant les cavités 7, et 9 les surfaces extérieures de ladite pièce 1. Pendant le moulage les cavités 7 sont formées chacune par un noyau 10 en élastomère de type silicone. Ces noyaux 10 étant longs et minces sont rigidifiés chacun par un barreau métallique 12 les traversant dans le sens de la longueur, lesdits barreaux ayant une section rectangulaire très aplatie dont les bords 12a sont arrondis. Le noyau de silicone 10 est obtenu par extrusion avec une cavité 13 à la forme du barreau 11, suivie d'une coupe à la longueur notée L sur la figure 2.

On introduit ensuite le barreau 11 dans la cavité 13 du noyau 10, ce qui ne présente aucune difficulté du fait de l'élasticité même faible du noyau 10. On drape ensuite les noyaux 10 par une ou plusieurs couches de fibres préimprégnées de résine 15. On dispose ensuite les noyaux drapés 10 + 15 côte à côte et on drape ensuite l'ensemble par une ou plusieurs couches de fibres préimprégnées de résine 16 de façon à constituer la pièce.

On dispose alors l'ensemble 10 + 15 + 16 dans la partie femelle 21 d'un moule 20, la paroi du fond 22 ayant la forme de la surface extérieure du flanc 2 de la pièce 1, la paroi du fond 22 étant adjacente à deux parois latérales 23a, 23b, lesdites parois latérales 23a, 23b étant parallèles et se prolongeant par des parois latérales évasées respectivement 24a, 24b chacune adjacente à une surface d'appui respectivement 25a, 25b. Le moule 20 comporte aussi une partie mâle ou poinçon 26 dont l'extrémité 27 est une paroi à la forme de la surface extérieure du flanc 3 de la pièce 1, cette paroi 27 étant adjacente à deux parois latérales 28a, 28b de forme complémentaire aux parois 23a, 23b, le poinçon 26 étant monté coulissant avec un jeu réduit par ses parois 28a, 28b entre les parois 23a, 23b qui en assurent le guidage. Les parois latérales 28a, 28b sont adjacentes à des surfaces d'appui respectivement 29a, 29b qui arrivent contre les surfaces d'appui 25a, 25b de la partie femelle 21. L'ensemble est entouré par une couche de feutre 30 et par une enveloppe souple ou sac 31 étanche connecté par un ajutage 32 à une source de dépression d'air 33. Le tout est disposé entre les deux plateaux 34, 35 d'un four presse non représenté.

On se reportera maintenant à la figure 2. Les extrémités 12b des barreaux 11 dépassent de chaque côté du noyau 10 et sont prises entre deux mores 40, 41 arrivant au contact l'un de l'autre par une surface de séparation 42, lesdits mores étant assemblés par des vis 43. Les blocs 40, 41 sont positionnés dans une cavité 44 du moule 20 débouchant sur l'extérieur, ladite cavité 44 ayant une forme complémentaire aux mors 40, 41 avec un jeu e d'environ 0,2 mm. L'intérieur de la cavité 44 comporte deux épaulements 45 permettant de positionner longitudinalement les mors 40, 41. La partie débouchante de la cavité 44 est comblée par un tampon de fente 46. On comprend que le jeu e met en communication la masse de matière composite 15, 16 avec le feutre 46 et permet d'évacuer l'excédent de résine tout en maintenant une pression interne suffisante. L'autre extrémité de l'ensemble non représentée est symétrique de l'extrémité représentée sur la figure 2. La distance entre la paire de mors 40, 41 et la paire de mores non représentée à l'autre extrémité est égale à la longueur L du noyau 10.

En l'espèce, les noyaux 10 sont en élastomère-silicone de dureté 70 shore A avec une température de fragmentation T2 de 290°C et un coefficient de dilatation thermique égal à 400.10^{-6/C.}On utilise dans cet exemple des fibres de carbone dont le coefficient de dilatation thermique est sensiblement nul jusqu'à 300°C. Ces fibres sont constituées en tissus et préimprégnées de résine polymérisable à chaud "PMR 15", "PMR 15" étant une marque de la société FIBERITE-USA. Cette résine a une température T1 de transition de l'état pâteux à l'état solide égale à 280°C et une température T3 de durcissement de la résine égale à 320°C.

Le procédé de fabrication de la pièce 1 comporte les opérations essentielles suivantes :
a) constitution des noyaux 10 par extrusion et coupe à la longueur L,
b) introduction d'un barreau métallique 11 dans chaque noyau 10, les extrémités 12b des barreaux 11 débordant de chaque côté du noyau 10,
c) drapage d'au moins une couche 15 de fibres préimprégnées de résine autour des noyaux 10,
d) saisie et réunion des ensembles barreaux 11 + noyaux 10 + couches préimprégnées 15 entre les mores 40, 41 par une extrémité 12b des barreaux 11 et serrage des mores 40, 41 par les vis 43
e) répétition de l'opération avec une seconde paire de mores 40, 41 à l'autre extrémité 12b de ces mêmes barreaux 11,
f) drapage de l'ensemble ainsi obtenu par au moins une couche 16 de fibres préimprégnées de résine,
g) mise de l'ensemble dans la partie femelle 21 du moule 20, et fermeture du moule 20 avec la partie mâle 26,
h) mise en place des tampons de feutre 46 à l'entrée des cavités 44 du moule 20, mise en place successivement autour du moule 20 de la couche de feutre 30 et du sac étanche 31 avec l'ajutage 32, et disposition de l'ensemble entre les plateaux 34, 35 du four-presse non représenté.

Le cycle thermique est celui de polymérisation de la résine. La montée en température s'accompagne de la dilatation des noyaux 10 et du rapprochement des parois 22 et 27 du moule 20 entre elles et par rapport aux noyaux 10 ce qui provoque la compression des couches 15, 16 de fibre préimprégnée. Le rapprochement des parois 22 et 27 s'effectue par le coulissement du poinçon 26 entre les parois 23a, 23b de la partie femelle 21 du moule 20, jusqu'à ce que les surfaces d'appui 25 et 29 arrivent au contact l'une de l'autre, ce qui positionne avec précision les parois 22 et 27 du moule entre elles et par rapport aux noyaux 10, et garantit la précision et la qualité des surfaces extérieures des deux flancs 2 et 3, ainsi que la précision des dimensions et du positionnement des cavités 7 par rapport aux flancs 2 et 3. Le coulissement s'effectue sous l'effet combiné de la pression exercée par les plateaux 34, 35 du four presse et de la pression atmosphérique s'exerçant sur le sac 31 mis en dépression.

Sous l'effet de la pression, l'excédant de résine s'évacue dans les cavités 44 autour des mores 40, 41 par le jeu e qui est laissé entre lesdits mores 40, 41 et les parois desdites cavités 44, la résine venant s'accumuler dans les tampons de feutre 46. En cas de besoin, l'homme du métier peut aussi prévoir des cavités complémentaires non représentées dans le moule pour recevoir l'excédent de résine.

La résine encore liquide émet sous l'effet de la polymérisation des gaz qui doivent impérativement être évacués pour éliminer les porosités de la matière composite. Cette évacuation est facilitée par la mise en dépression du sac 31 à partir de l'ajutage 32, cette dépression se transmettant jusqu'à la résine par l'intermédiaire du feutre 30 disposé entre le sac 31 et le moule 20, entre les parois 23ab et 28ab, et par les tampons de feutre 46 et le jeu e.

Avantageusement aussi on peut percer les mores 40, 41 par une pluralité de trous coniques 47 mettant en communication la matière composite avec les tampons de feutre 46, afin de faciliter l'évacuation de la résine en excédant et des gaz. La conicité des trous 47 facilite l'enlèvement de la résine durcie après le moulage.

Lorsque la température T de la matière composite a atteint la température T1 = 280°C de transition entre l'état pâteux et l'état solide, les noyaux d'élastomère-silicone 10 ont atteint par dilatation thermique les dimensions des cavités 7 à obtenir ce qui en garantit la précision. A T > T1, la matière composite solidifiée maintenue par les parois 22, 27 du moule 20 s'oppose à la dilatation des noyaux 10 dont la matière commence à se réticuler. Lorsque la température T a atteint la température T2 = 290° de fragmentation de l'élastomère, les noyaux 10 commencent à se désagréger et n'exerceront plus de pression sur la matière composite. La polymérisation peut alors se poursuivre jusqu'à la température de durcissement de la résine T3 = 320°C.

L'ensemble est ensuite démoulé à chaud pour que le moule 20 en se contractant avec la diminution de la température ne vienne pas écraser la matière composite qui est maintenant solidifiée et durcie. Ensuite, on casse et on enlève les masses de résine en excédant, on démonte les mors 40, 41, on retire les barreaux 11 et on élimine mécaniquement la matière des noyaux 10 fragmentée à l'intérieur des cavités 7 par tout moyen mécanique non abrasif : grattage, soufflage, lavage.

Avec un tel procédé, un bras de carter de turbomachine ayant une longueur L = 400 mm et une largeur de 12 mm, les flancs 2, 3 ayant une épaisseur de deux millimètres, a été obtenue brute de moulage avec une précision géométrique de 0,05 mm pour les surfaces formées par les parois du moule, et une précision géométrique de 0,1 mm pour les surfaces formées par les noyaux, lesdites surfaces extérieures et intérieures étant parfaitement lisses, les reprises mécaniques étant limitées à l'ébaburage de la résine durcie le long des lignes d'évacuation de ladite résine en excédant, ainsi qu'aux perçages de trous de fixation aux extrémités de la pièce 1. La porosité de la matière composite a été ramenée à 2%.

Grâce à la résine employée, la pièce 1 est utilisable à une température de service de 280°C et peut supporter temporairement une température atteignant 325°C.

L'invention n'est pas limitée à l'exemple de réalisation qui vient d'en être donné, mais en couvre au contraire les variantes qui pourraient lui être apportées au niveau de la pièce à obtenir et des moyens à mettre en oeuvre :

Bien évidemment, les noyaux peuvent être de nombre et de forme variable selon la pièce à obtenir, et les trous par lesquels débouchent les cavités peuvent être de dimension réduite par rapport auxdites cavités. L'utilisation des barreaux 11 n'est pas nécessaire lorsque les noyaux 10 sont courts et donc peu exposés à la flexion. On utilisera alors un élastomère plus dur afin de prévenir des déformations éventuelles desdits noyaux.

Dans le cas ou la pièce 1 ne comporte qu'une cavité, on peut à la limite n'utiliser qu'une seule couche de fibre préimprégnée de résine. Dans le cas de pièces aplaties, la compression centripète sera faite sur les flancs 2, 3 de la pièce 1.

Dans cet exemple, les parois des cavités sont formées de lignes géométriques parallèles, ce qui a permis d'obtenir des noyaux 10 directement par extrusion et coupe à la longueur L. Dans le cas de cavités de forme plus quelconque, par exemple en tonnelet, le noyau 10 sera obtenu par moulage. On remarquera que les barreaux métalliques 11 peuvent être omis dans le cas des noyaux 10 de forme ramassée, le noyau 10 pouvant être rigidifié par le choix d'un élastomère de dureté shore A plus élevée, ou par inclusion de microbilles dans l'élastomère.

Les trous mettant en communication les cavités avec l'extérieur peuvent être de dimensions réduites, puisque les noyaux s'effritent pendant le cycle thermique de polymérisation, ce qui simplifie ensuite l'enlèvement de la matière les composant.

L'utilisation conjointe du sac 31 mis en dépression et du four presse permet d'atteindre la pression de 8 bars requise pour la compression de la résine employée dans cet exemple. On peut aussi utiliser une presse ordinaire et un moule chauffé par exemple avec les résistances électriques. Dans le cas où la résine n'exigerait qu'une compression inférieure à un bar, cette compression peut être obtenue sans presse sous le seul effet de la pression atmosphérique.

## Revendications

1. Procédé de réalisation de pièces creuses en matériau composite stratifié comportant des fibres de renfort noyées dans une matrice de résine polymérisée à chaud, ladite pièce creuse (1) comportant au moins une cavité (7), ledit procédé comportant les opérations essentielles suivantes :
a) réalisation de noyaux (10) à la forme des cavités (7) de la pièce (1),
b) drapage des noyaux (10) par au moins une couche de fibres de renfort imprégnées de résine polymérisable à chaud (15, 16), pour constituer la matière composite,
c) disposition de l'ensemble noyaux (10) + fibres préimprégnées (15, 16) dans un moule (20),
d) compression, polymérisation, démoulage de la pièce (1) et retrait des noyaux (10),
avec les particularités suivantes :
a) la compression est effectuée par le rapprochement des parois (22, 27) du moule (20) vers les noyaux (10, afin de former simultanément les surfaces intérieures (8) et extérieures (9) et de provoquer un fluage suffisant de la résine pendant la polymérisation,
b) le moule (20) comporte une partie femelle (21) supportant l'une des parois (22), ledit moule (20) comportant aussi une partie mâle (26) supportant l'autre parois (27), ladite partie mâle (26) coulissant dans ladite partie femelle (21), lesdites parties femelle (21) et mâle (26) comportant des surfaces d'appui (25,29) positionnant avec précision les parois (22,27) entre elles et avec les noyaux (10), le rapprochement desdites parois (22,27) s'effectuant par le coulissement de la partie mâle (26) dans la partie femelle(21),
**caractérisé en ce que** :
a) les noyaux (10) sont thermiquement expansibles en élastomère silicone, afin de tendre les fibres de renfort pendant la polymérisation,
b) l'élastomère silicone des noyaux (10) a une température d'effritement T2 inférieure à la température T3 de polymérisation complète de la résine afin de désagréger les noyaux (10) pendant le moulage de la pièce.

2. Procédé selon la revendication 1, la résine comportant pendant sa polymérisation une phase de dégagements gazeux et une phase de durcissement séparées par une phase pendant laquelle la résine est encore liquide, **caractérisé en ce que** la compression sera effectuée entre la phase de dégagement gazeux et la phase de durcissement, afin de maintenir une quantité plus importante de résine à l'intérieur du moule.

3. Procédé selon la revendication 1 ou 2, **caractérisé en ce qu'**à la température T1 de transition de l'état pâteux à l'état solide de la résine, les noyaux (10) d'élastomère silicone ont les dimensions des cavités (7) de la pièce (1) à cette température T1, afin de donner auxdites cavités (7) les dimensions requises au départ du durcissement de la résine.

4. Procédé selon l'une quelconque des revendications 1 à 3, **caractérisé en ce que** l'élastomère-silicone a une température d'effritement comprise entre la température T1 de transition de l'état pâteux à l'état solide de la résine et la température T3 de polymérisation complète de la résine, afin de maintenir les noyaux (10) à l'état solide tant que les cavités n'ont pas été formées aux dimensions requises, et afin de désagréger ensuite lesdits noyaux (10) alors que la matière composite est passée à l'état solide.

5. Procédé selon la revendication 4, **caractérisé en ce que** les noyaux (10) sont renforcés par des barreaux (11) en matériau plus résistant, afin d'éviter la déformation desdits noyaux (10) pendant le drapage de la matière composite (15, 16) ou le moulage.

6. Procédé selon la revendication 5, **caractérisé en ce que** les barreaux de renfort (11) débordent des noyaux (10) et prennent appui dans le moule (20) afin de garantir la précision du positionnement desdits noyaux (10) dans ledit moule (20).

7. Procédé selon l'une quelconque des revendications 1 à 6, ledit procédé mettant en oeuvre au moins deux noyaux (10),
**caractérisé en ce que** :
a) on drape séparément chaque noyau (10) avec au moins une couche de matière composite (15),
b) on réunit ensuite les noyaux drapés (10 +15) et on drape l'ensemble obtenu par au moins une couche de matière composite (16).

## Patentansprüche

1. Verfahren zur Herstellung von hohlen Körpern aus geschichtetem Verbundwerkstoff mit in eine Matrix aus heißpolymerisiertem Harz eingebetteten Verstärkungsfasern, wobei der Hohlkörper (1) mindestens eine Vertiefung (7) aufweist, wobei das Verfahren die folgenden wichtigen Arbeitsschritte aufweist:
a) Formung eines Kerns (10) in Form der Hohlräume (7) des Körpers (1),
b) Bedecken der Kerne (10) mit mindestens einer Schicht aus mit heiß polymerisierbarem Harz imprägnierten Verstärkungsfasern (15, 16) zur Bildung des Verbundwerkstoffes,
c) Anordnen der Gesamtanordnung aus Kern (10) und vorimprägnierten Fasern (15, 16) in einer Gießform (20),
d) Kompression, Polymerisation, Abstreifen des Körpers (1) und Rückziehen der Kerne (10),
mit den folgenden Besonderheiten:
a) die Kompression erfolgt durch Annähern der Wände (22, 27) der Gießform (20) gegen die Kerne (10) um simultan die Innenflächen (8) und Außenflächen (9) zu formen und um ein ausreichendes plastisches Fliessen des Harzes während der Polymerisation hervorzurufen,
b) die Gießform (20) weist ein rückspringendes Teil (21) auf, das eine der Wände (22) aufweist, wobei die Gießform (20) ferner ein vorspringendes Teil (26) aufweist, dass in dem rückspringenden Teil (21) gleitet, wobei das rückspringende Teil (21) und das vorspringende Teil (26) Anlageflächen (25, 29) aufweisen, die hochgenau die Wände (22, 27) zwischen sich und den Formen (10) positionieren, wobei die Annäherung der Wände (22, 27) durch das Verschieben des vorspringenden Teils (26) in dem rückspringenden Teil (21) erfolgt,
**dadurch gekennzeichnet, dass**
a) die Kerne (10) wärmedehnbar aus Silikon-Elastomer bestehen, um die Verstärkungsfasern während der Polymerisation zu spannen,
b) das Silikon-Elastomer der Kerne (10) eine Zersetzungstemperatur T2 aufweist, die niedriger ist, als die Temperatur T3 der vollständigen Polymerisation des Harzes, um die Kerne (10) während des Gießens des Körpers zu zerlegen.

2. Verfahren nach Anspruch 1, wobei das Harz während seiner Polymerisation eine Phase der Gasabgabe und eine Phase der Verfestigung aufweist, die durch eine Phase getrennt sind, während der das Harz noch flüssig ist, **dadurch gekennzeichnet, dass** die Kompression zwischen der Phase der Gasabgabe und der Phase der Verfestigung erfolgt, um eine sehr wesentliche Menge des Harzes im Inneren der Form zu halten.

3. Verfahren nach Anspruch 1 oder 2, **dadurch gekennzeichnet, dass** bei der Temperatur T1 des Übergangs vom plastischen Zustand zum festen Zustand des Harzes die Kerne (10) aus Silikon-Elastomer die Abmessungen der Vertiefungen (7) des Körpers (1) bei dieser Temperatur T1 haben, um den Vertiefungen (7) die Abmessungen zu geben, die am Ende der Verfestigung des Harzes erforderlich sind.

4. Verfahren nach einem der Ansprüche 1 bis 3, **dadurch gekennzeichnet, dass** das Silikon-Elastomer eine Zersetzungstemperatur besitzt, die zwischen der Temperatur T1 des Übergangs vom plastischen Zustand zum festen Zustand des Harzes und der Temperatur T3 der vollständigen Polymerisation des Harzes liegt, um die Kerne (10) in festem Zustand zu halten, solange nicht die Vertiefungen in die erforderlichen Dimensionen geformt worden sind und um anschließend die Kerne (10) zu zerlegen, während der Verbundwerkstoff in den festen Zustand übergeht.

5. Verfahren nach Anspruch 4, **dadurch gekennzeichnet, dass** die Kerne (10) durch Stäbe (11) aus widerstandsfähigerem Material verstärkt sind, um die Verformung der Kerne (10) während der Aufbringung des Verbundwerkstoffes (15, 16) oder der Gießformung zu vermeiden.

6. Verfahren nach Anspruch 5, **dadurch gekennzeichnet, dass** die Verstärkungsstäbe (11) über die Kerne (10) hinausragen und in der Form (2) aufliegen um die Präzision der Positionierung der Kerne (10) in der Gießform (20) sicherzustellen.

7. Verfahren nach einem der Ansprüche 1 bis 6, wobei das Verfahren mindestens zwei Kerne (10) verwendet, **dadurch gekennzeichnet, dass**
a) jeder Kern (10) mit mindestens einer Schicht aus Verbundwerkstoff (15) getrennt versehen wird,
b) anschließend die beschichteten Kerne (10 + 15) vereinigt werden und die so erhaltene Anordnung durch mindestens eine Schicht des Verbundwerkstoffes (16) bedeckt wird.

## Claims

1. Process for producing hollow articles made of a laminated composite comprising reinforcing fibres embedded in a heat-cured resin matrix, the said hollow article (1) having at least one cavity (7), the said process comprising the following essential operations:
a) production of cores (10) to the shape of the cavities (7) in the article (1),
b) draping of the cores (10) with at least one ply of reinforcing fibres impregnated with a heat-curable resin (15, 16), in order to form the composite,
c) placing of the core (10)/pre-impregnated fibres (15, 16) assembly in a mould (20) and
d) compression, curing and demoulding of the article (1) and removal of the cores (10),
with the following features:
a) the compression is carried out by bringing the walls (22, 27) of the mould (20) closer together towards the cores (10), so as to simultaneously form the inner surface (8) and the outer surface (9) and to cause sufficient flow of the resin during curing and
b) the mould (20) comprises a female part (21) supporting one (22) of the walls, the said mould (20) also comprising a male part (26) supporting the other wall (27), the said male part (26) sliding in the said female part (21), the said female (21) and male (26) parts having bearing surfaces (25, 29) accurately positioning the walls (22, 27) with respect to each other and with the cores (10), the said walls (22, 27) being brought closer together by the male part (26) sliding in the female part (21),
**characterized in that**:
a) the cores (10), made of a silicone elastomer, are thermally expansible so as to tension the reinforcing fibres during curing and
b) the silicone elastomer of the cores (10) has a crumbling temperature T2 below the temperature T3 of complete curing of the resin, so that the cores (10) disintegrate during moulding of the article.

2. Process according to Claim 1, the resin having, while it is curing, a gas evolution phase and a hardening phase that are separated by a phase during which the resin is still liquid, **characterized in that** the compression will be carried out between the gas evolution phase and the hardening phase so as to keep a larger amount of resin inside the mould.

3. Process according to Claim 1 or 2, **characterized in that**, at the temperature T1 of the transition from the pasty state of the resin to its solid state, the silicone elastomer cores (10) have the dimensions of the cavities (7) in the article (1) at this temperature T1, so as to give the said cavities (7) the dimensions required when the resin starts to harden.

4. Process according to any one of Claims 1 to 3, **characterized in that** the silicone elastomer has a crumbling temperature between the temperature T1 of the transition from the pasty state of the resin to its solid state and the temperature T3 of complete curing of the resin, so as to keep the cores (10) in the solid state until the cavities have been formed to the required dimensions and so as subsequently to disintegrate the said cores (10) when the composite has passed into the solid state.

5. Process according to Claim 4, **characterized in that** the cores (10) are reinforced by bars (11) made of a stronger material, so as to prevent deformation of the said cores (10) during draping of the composite (15, 16) or during moulding.

6. Process according to Claim 5, **characterized in that** the reinforcing bars (11) extend beyond the cores (10) and bear in the mould (20) so as to guarantee the precision with which the said cores (10) are positioned in the said mould (20).

7. Process according to any one of Claims 1 to 6, the said process employing at least two cores (10), **characterized in that**:
a) each core (10) is draped separately with at least one ply of composite (15) and
b) the draped cores (10 + 15) are then joined and the assembly obtained is draped with at least one ply of composite (16).
